# DEMANDE DE BREVET EUROPEEN

(11) **EP 0 854 600 A1**
(43) Date de publication de la demande: **22.07.1998**
(21) Numéro de dépôt: 98400081.0
(22) Date de dépôt: 16.01.1998
(51) Int. Cl.: H04J 4/00, H04B 7/26

(54) **Procédé auto-adaptatif de transmission de données et dispositif de mise en oeuvre**

(30) Priorité: 21.01.1997 FR 9700588
(71) Demandeur: THOMSON-CSF, 75008 Paris (FR)
(72) Inventeur: Auger, Gérard, 94117 Arcueil Cedex (FR); Bacelon, Olivier, 94117 Arcueil Cedex (FR)
(74) Mandataire: Lincot, Georges

(57) **Abrégé**

Le but de l'invention est de permettre le fonctionnement simultané, sans planification, sans données initiales et sans gestion centralisée, d'un grand nombre de stations, tout en restant compatible avec les formes d'onde des systèmes connus.

Pour ce faire, l'invention propose une procédure auto-adaptative et décentralisée par allocation de toutes les ressources temps/fréquence disponibles à instant donné à autant de mobiles demandeurs. La transmission entre stations (I,II,...) étant réalisée par allocation de fréquences (Q₁-Q_{q}), le procédé consiste, pour chaque fréquence allouée, à grouper la transmission sur des créneaux (1) formant des trames (Tₙ) dans un espace temps/fréquence, chaque trame (Tₙ) comportant n créneaux (1) de même durée (T) et de même largeur (AF), à utiliser successivement les fréquences allouées (Q₁-Q_{q}), à utiliser les trames pour chaque transmission d'une station (I,II,...) par occupation d'un même nombre de créneaux selon un modulo p, et à rechercher au cours d'une procédure de veille les créneaux libres pour déterminer les paramètres d'occupation d'une transmission en fonction de l'état d'occupation des trames de l'espace temps/fréquence existant avant cette transmission.

## Description

La présente invention se rapporte au domaine de la transmission d'informations entre stations de communication, en particulier entre stations constituées en réseau dont les couvertures s'interpénètrent.

Les systèmes de transmission d'informations connus procèdent
- soit par allocation de fréquence, c'est-à-dire par répartition des fréquences disponibles entre les différents réseaux,
- soit par allocation de créneaux temporels, c'est-à-dire par répartition dans le temps distincte pour les réseaux ou pour les différentes communications simultanées.

Chaque réseau comportant une ou plusieurs stations de base, l'allocation peut être effectuée à la demande d'une station de base, ou prédéterminé manuellement, ou encore par des dispositifs de gestion centralisée.

Tous les systèmes de radio-communication pour mobiles, tels que « GSM », « DECT », « DCS 1800 », « TETRA », fonctionnent sur ces principes d'allocation, des communications directes de mobile à mobile pouvant parfois être admises par dérogation. La demande de brevet européenne publiée, EP-486362, décrit un exemple de réalisation de système de transmission de données entre mobiles de ce type.

Ces systèmes nécessitent une planification et une centralisation des fréquences ou des créneaux temporels alloués. Cette gestion s'oppose à la mise en place d'une souplesse d'utilisation permettant à chaque station d'émettre dans des conditions optimisées en fonction de l'occupation du réseau, en particulier elle ne permet pas d'éviter l'apparition de blocages ou de saturation du trafic à écouler.

Le but de l'invention est de pallier les inconvénients précités, en permettant le fonctionnement simultané, sans planification, sans données initiales et sans gestion centralisée, d'un grand nombre de stations, tout en restant compatible avec les formes d'onde des systèmes connus.

Pour atteindre cet objectif, la présente invention propose une procédure auto-adaptative, dynamique et décentralisée par allocation de toutes les ressources temps/fréquence disponibles à un instant donné à autant de mobiles demandeurs.

Plus précisément, l'invention a pour objet un procédé auto-adaptatif de transmission de données entre stations d'un système radio décentralisé dans lequel des fréquences sont allouées aux transmissions d'informations entre ces stations dans une bande de fréquence disponible, et consistant à grouper les transmissions sur des trames dans un espace temps/fréquence, caractérisé en ce qu'il consiste à grouper la transmission sur des créneaux formant des trames dans un espace temps/fréquence, chaque trame comportant n créneaux de même durée et de même largeur étant portée par une fréquence allouée, à utiliser successivement dans le temps les fréquences de transmission allouées, à utiliser les trames pour chaque transmission d'une station par occupation d'un même nombre de créneaux sur les trames selon un modulo p, p étant limité par une valeur supérieure, et à rechercher au cours d'une procédure de veille les créneaux libres pour déterminer les paramètres d'occupation d'une transmission future émise à partir d'une station en fonction de l'état d'occupation des trames de l'espace temps/fréquence existant avant cette transmission.

L'invention concerne également un dispositif émetteur/récepteur permettant d'élaborer, à partir d'une table d'occupation, les caractéristiques d'une émission conforme au procédé de l'invention, pour une station donnée en fonction de l'état d'occupation des communications.

L'invention s'applique plus particulièrement à l'établissement de transmission directe entre stations évoluant de manière aléatoire, sans station de contrôle, en mode conférence ou en mode point à point, avec relayage ou non. L'intérêt de l'invention sera d'autant plus visible que le trafic a écouler est important par rapport à la bande de fréquence allouée.

D'autres avantages et caractéristiques de l'invention ressortiront ci-après, à l'aide de la description qui suit en référence aux dessins annexés, qui représentent respectivement :
- la figure 1, un diagramme temps/fréquence illustrant le procédé de transmission à partir d'une trame selon l'invention, avec une vue de trame agrandie;
- la figure 2, un diagramme temps/fréquence illustrant la mise en oeuvre de plusieurs trames orthogonales;
- la figure 3, un exemple de réalisation de dispositif émetteur/récepteur mettant en oeuvre le procédé selon l'invention.

Le procédé selon l'invention s'applique au cas où les stations d'émission/réception sont, par exemple, des mobiles, des véhicules ou des terminaux fixes. Elles forment un système qui peut être constitué en un réseau unique ou en plusieurs réseaux.

Lorsqu'elles sont constituées en réseau, les stations circulent dans un environnement de balises radio-électriques disposées sur leur parcours, ces balises étant équipées des mêmes moyens de transmission d'informations que ceux équipant les mobiles, les véhicules ou les terminaux.

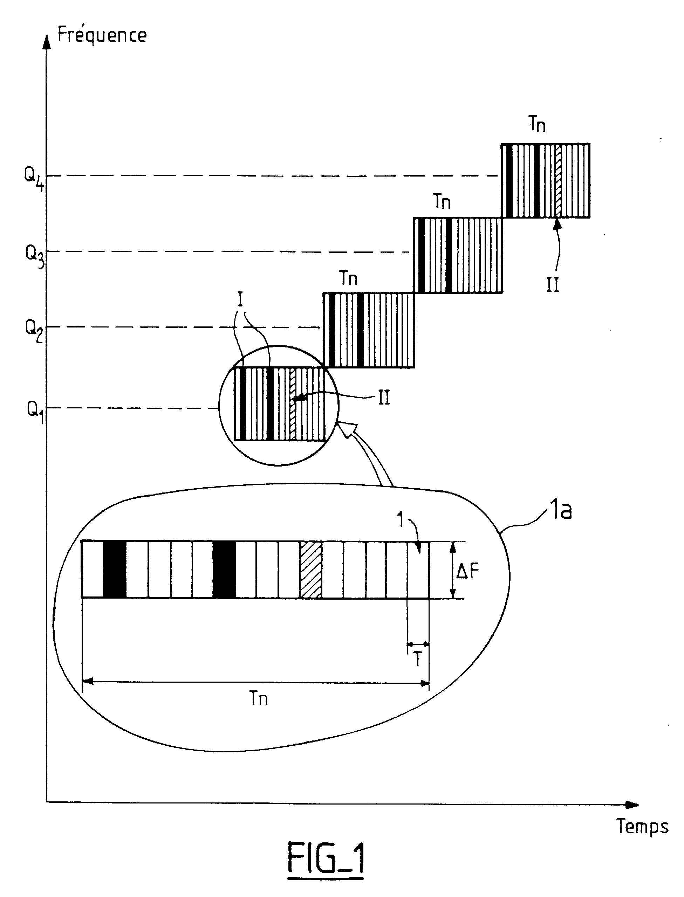

Selon l'invention, et tel qu'illustré par le diagramme de la figure 1, l'espace temps/fréquence dans lequel les transmissions d'informations entre différentes stations d'un système sont établies est divisé, pour une fréquence Q₁ donnée, en créneaux 1 de durée T et de largeur ΔF. Pour chaque fréquence Q₁, illustrée en particulier sur la vue agrandie 1a, les créneaux 1 sont groupés en une trame Tₙ, chaque trame Tₙ comportant n créneau 1. La bande de fréquence disponible pour l'ensemble des stations concernées comporte Q₁ à Q_{q} fréquences de transmission, adjacentes ou non. Dans l'exemple de réalisation illustré, q est égal à quatre, les fréquences allouées sont égales à 5,201, 5,202, 5,203, et 5,204 GHz, le nombre de créneaux n est égal à 16, leur durée T égale à 1 ms et leur largeur ΔF égale à 1 MHz.

L'utilisation d'une trame de n créneaux sur q fréquences correspond donc à l'utilisation d'une trame de nq créneaux. Sur la figure 1, les quatre fréquences Q₁ à Q₄ de transmission allouées sont utilisées successivement dans le temps par ordre de valeur croissante. Plus généralement, l'utilisation de ces fréquences peut être effectuée au cours du temps dans un ordre quelconque, et si les stations disposent d'une horloge de référence, cet ordre peut encore être périodiquement modifié de manière pseudo-aléatoire.

Dans l'exemple de réalisation, deux stations quelconques du système, I et Il, communiquent des données. Les trames sont utilisées par chaque station par occupation d'un certain nombre de créneaux, 2 pour la station I et 1 pour la station Il, à raison d'une trame sur p trames successives, p étant égal à 1 pour la station 1, et égal à 3 pour la station II. Le nombre p désigne donc un « modulo » périodique.

Préférentiellement, le nombre p est premier avec le nombre q, les trames comportant pn créneaux étant alors privilégiées car elles permettent une occupation optimale en utilisant toutes les fréquences en pq trames exactement.

Le modulo p et le nombre de créneaux utilisés dans chaque trame, modulo p, sont choisis pour chaque station lors de l'exécution d'une procédure de veille définie plus loin. Dans tous les cas, les informations transmises sont ainsi groupées par paquets modulo p, p étant variable et limité par une valeur p_{L}.

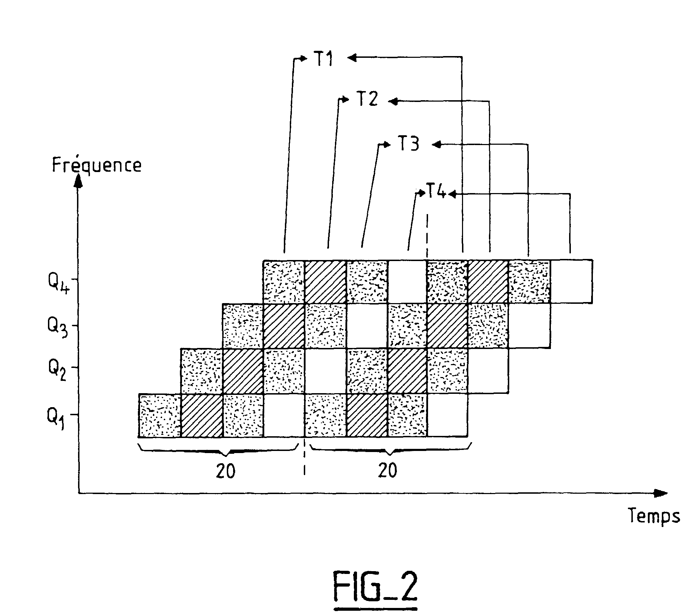

Pour optimiser les communications entre toutes les stations du système, les trames ont toutes le même nombre n de créneaux et sont organisées de manière à occuper tout l'espace temps/fréquence. Cette optimisation correspond à un pavage orthogonal pour des trames ayant un même nombre de créneaux. Il a été représenté, sur la figure 2., un tel pavage orthogonal 20 dans un diagramme temps/fréquence pour quatre fréquences allouées, Q₁ à Q₄ et quatre trames orthogonales, T₁ à T₄, qu'il est possible de définir avec quatre fréquences allouées.

Lorsqu'une station désire émettre de l'information, elle utilise un même nombre de créneaux dans des trames se succédant selon le modulo p, prédéterminé en fonction de l'occupation et des caractéristiques de la communication à émettre au cours d'une procédure de veille. Par exemple, la station I utilise deux créneaux modulo 1 (p = 1), c'est-à-dire à chaque trame, alors que la station Il utilise un créneau modulo 3 (p = 3), c'est-à-dire une trame sur trois.

Chaque station activée procède d'abord à une procédure de veille pour rechercher les créneaux libres aux fins d'une émission future prédéterminée.

Dans une première étape de procédure, la station écoute sur une fréquence donnée dite fréquence de veille Qᵥ, pendant une durée au moins égale à qnp_{L}T. Elle est ainsi assurée de recevoir au moins un créneau de toutes les stations en cours de transmission, qui émettent sur des trames pn, lorsque p est un nombre premier avec q.

Les stations émettrices indiquent, par un message dans chaque créneau qu'elles occupent, ou au moins dans l'un des créneaux occupés par trame occupée, l'état d'occupation de l'espace temps/fréquence tels qu'il leur apparaît. Chaque station peut alors définir une table d'occupation et, au cours d'une seconde étape, choisir au vu de cette table un ou des créneaux identifiés comme libres par elle-même et les autres stations dont la table d'occupation est à portée de communication.

Plus précisément, le nombre de créneaux occupés par trame occupée et la durée de ces créneaux dépendent du débit moyen défini par la modulation utilisée, et de l'occupation des caractéristiques de transmission utilisées : codage , séquences de synchronisation et préambules.

Le choix de la fréquence de veille est indifférent. Cependant, il peut être avantageusement conditionné par une détection de brouillage. Cette détection de brouillage peut être induite par différentes alarmes, par exemple un niveau de puissance détectée anormalement élevé, un signal reçu qui n'obéit pas aux règles de périodicité imposées au système, un codage des préambules non reconnu, etc...

Si, pendant la durée d'émission élémentaire T d'un créneau, une station émet I bits d'informations, le débit souhaité peut être égal à un multiple K du débit moyen Iₘ du système (Iₘ = I/nT bits/s). Suivant la source d'information ou la quantité d'informations à transmettre, la station émet alors K créneaux par trame de n créneaux. Si le débit souhaité est de Iₘ/p, la station émet un créneau toutes les p trame (station Il dans l'exemple illustré à la figure 1). Pendant la durée de transmission, chaque créneau porte l'indication de sa récurrence pnT.

Plus généralement, les stations forment un système qui communique soit directement, en mode conférence ou en mode point à point, soit à travers des réseaux dont les couvertures spatiales s'interpénètrent. Les formes d'ondes « D E C T », « G S M » ou « TETRA » sont compatibles avec la gestion décentralisée des créneaux temps/fréquence selon l'invention. Les informations, transmises sous forme de paquets, peuvent correspondre à un découpage en cellules « ATM » dans un contexte d'application multi-média. Les cellules sont alors transmises sans regroupement en choisissant une distribution de créneaux appropriés dans le pavage orthogonal décrit plus haut.

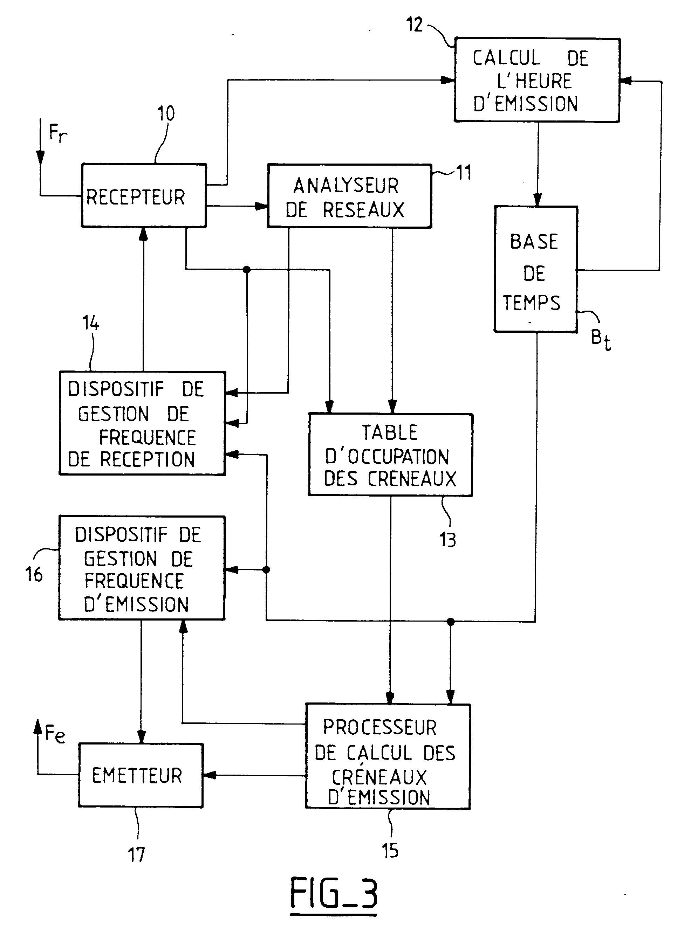

Dans un exemple de mise en oeuvre du procédé selon l'invention, chaque station dispose d'un dispositif de traitement permettant d'élaborer une table d'occupation des créneaux. En fonction de cette table d'occupation, il est possible d'adapter l'émission à l'occupation détectée. La figure 3 illustre un exemple de réalisation d'un tel dispositif de traitement. En référence à cette figure, un récepteur 10 reçoit un signal représentant la fréquence de réception Fᵣ captée par la station. Le récepteur 10 transmet :
- un signal d'occupation des créneaux démodulés à un analyseur de réseau 11;
- un top de réception des fréquences reçues à un organe de calcul de recalage 12 de base de temps local Bₜ ;
- un signal indiquant le niveau de puissance reçue pendant les créneaux démodulés à un organe de calcul de table d'occupation 13 couplé également à l'analyseur de réseau 11;
- un signal de niveau de puissance reçue à l'extérieur des créneaux démodulés à un organe de gestion des fréquences reçues 14 pour estimer le brouillage de la fréquence de veille utilisée.

Le dispositif de traitement récepteur/émetteur pour mettre en oeuvre le procédé sur l'invention, comporte également un organe de calcul des créneaux d'émission 15 pour la station à laquelle il est localement attaché. Cet organe est couplé à l'organe de calcul de la table d'occupation des créneaux 13, transmet des informations à un organe de gestion des fréquences d'émission 16, et commande un émetteur 17 pour émettre une fréquence Fₑ.

En fonctionnement, l'organe de calcul de recalage de la base de temps 12 ajuste les instants d'émission périodiques de période T des créneaux d'émission en fonction des instants de réception fournis par le récepteur 10. L'organe de gestion des fréquences de réception 14 choisit, d'une part, la fréquence de réception des créneaux porteurs des informations destinées à la station et, d'autre part, la fréquence de veille exempte de brouillage de l'activité de l'ensemble des réseaux ou de l'activité d'un réseau particulier à travers l'activité d'une trame. Le calcul de la table d'occupation des créneaux par l'organe 13 s'effectue ensuite à partir de l'identification de tous les créneaux démodulés par l'analyseur de réseau 11, associée aux informations sur l'occupation distante qu'ils portent, et au niveau de puissance du signal reçu transmis directement par le récepteur 10.

L'identification des créneaux d'émission est déterminée par l'organe de calcul 15 à partir du nombre de créneaux nécessaires définis en fonction :
- du service souhaité (nombre de destinataires, recoupement des transmissions d'un même réseau sur une même trame, ou autre service particulier) et
- de l'occupation des créneaux déterminée par l'organe de calcul de la table d'occupation 13.

Le choix de la fréquence d'émission Fₑ est ensuite effectué à partir de l'organe de gestion 16 en fonction de la base de temps local, calé par l'organe de calcul 12, et des créneaux d'émission définis par l'organe de calcul 15. L'organe de gestion 16 commande alors l'émission de l'émetteur 17. Les organes de calcul et de gestion sont regroupés dans un même processeur de traitement d'informations standard, assisté par exemple par un réseau de portes programmable pour la gestion des bases de temps. Une telle programmation entre dans le cadre des compétences de l'homme de l'art.

Pour optimiser l'occupation de l'espace temps/fréquence conformément à la figure 2, il convient de synchroniser les bases de temps Bₜ d'émission de toutes les stations sur la période T. Un tel synchronisme peut résulter de la mise en oeuvre de différentes techniques.

Le plus simple consiste à disposer d'une horloge de référence commune, externe au système de transmission des informations selon l'invention.

Une autre consiste à caler la base de temps Bₜ de chaque station sur celle de la station la plus en avance. Cette mise en oeuvre est réalisée dans l'exemple illustré par la figure 3.

Une troisième technique consiste à calculer la moyenne des heures de réception des créneaux et à recaler la base de temps de la station considérée sur cette moyenne.

Une autre technique consiste encore à diviser l'intervalle de durée élémentaire T en sous-intervalles. L'émission est alors programmée pour se produire dans le sous-intervalle modulo T où ont été reçus le maximum de créneaux à un instant correspondant à la moyenne des instants de réception de ces créneaux. En cas d'égalité entre plusieurs sous-intervalles, le sous-intervalle le plus en avance est choisi. Les moyens de calcul à mettre en oeuvre sont également de la compétence de l'homme de l'art.

Selon une variante de réalisation on utilise des horloges de trame modulo p communes pour déterminer des créneaux libres en vue d'une émission.

Il est aussi possible de déduire les créneaux d'émission de la réception d'un seul créneau et de l'information de récurrence d'émission qui peut se déduire des signaux reçus par le récepteur.

La procédure de veille se poursuit, quelque soit l'état du système. A l'initialisation, chaque station veille, de la manière décrite plus haut, sur des paliers de fréquence ininterrompus, chaque palier durant au moins qnp_{L}T.

Dès que des créneaux porteurs d'informations destinées à une station sont reçus par celle-ci, le palier de veille correspondant de cette station est interrompu pour permettre la réception des créneaux. De ce fait, cette station devient aveugle aux créneaux en phase temporelle, même transmis sur une autre fréquence. De plus, la détection d'une nouvelle communication est retardée au maximum de la durée du palier, par exemple égale à q n p_{L} T dans l'exemple de réalisation. Dans ces conditions, les stations communiquant entre elles utilisent de préférence des trames phasées, telles qu'illustrées à la figure 2 par les trames T₁ à T4. Cette utilisation a le double avantage d'éviter la présence de zones de communication aveugles vis-à-vis des stations d'un même réseau, et d'accélérer la prise de communication en réduisant le palier de veille sur des fréquences de durée nT.

Afin de faire face au problème de la saturation du trafic, une procédure appropriée de sélection des créneaux d'émission disponibles est mise en place lorsque le nombre de créneaux demandés devient supérieur au nombre de créneaux disponibles pour une station donnée. Cette procédure consiste à calculer une densité d'occupation de chaque créneau par pondération de l'occupation des créneaux par la puissance du signal directement reçu par la station qui désire émettre. La pondération peut être également réalisée par la puissance reçue des stations indiquant dans un message qu'elles observent également ce créneau occupé. Le choix des créneaux d'émission est alors effectué préférentiellement par tirage aléatoire parmi ceux des créneaux dont la densité d'occupation est la plus faible.

Dans ces conditions, la portée de chaque station est limitée puisque son émission peut interférer avec celle d'une station lointaine, sans jamais interdire totalement l'émission d'une station ni conduire à un blocage du réseau. Cette procédure peut être activée individuellement par toute station qui observe que le trafic écoulé par l'ensemble du système est supérieur à un certain seuil.

L'invention n'est pas limitée aux exemples de réalisation décrits ou représentés. Il est par exemple possible d'adjoindre au présent procédé des procédures de gestion des cas de station cachée ou de choix simultané d'un même créneau par plusieurs stations (cas des collisions).

## Revendications

1. Procédé auto-adaptatif de transmission de données entre stations (I,II,...) d'un système radio décentralisé dans lequel des fréquences (Q₁..Q_{q}) sont allouées aux transmissions d'informations entre ces stations dans une bande de fréquence disponible, et consistant à grouper les transmissions sur des trames dans un espace temps/fréquence, caractérisé en ce qu'il consiste à grouper la transmission sur des créneaux (1) formant des trames (Tₙ) dans un espace temps/fréquence, chaque trame (Tₙ) comportant n créneaux (1) de même durée (T) et de même largeur (ΔF) étant portée par une fréquence allouée, à utiliser successivement dans le temps les fréquences de transmission allouées (Q₁..Q_{q}), à utiliser les trames pour chaque transmission d'une station (I,II,...) par occupation d'un même nombre de créneaux sur les trames selon un modulo p, p étant limité par une valeur supérieure (p_{L}), et à rechercher au cours d'une procédure de veille les créneaux libres pour déterminer les paramètres d'occupation d'une transmission future émise à partir d'une station (I,II,...) en fonction de l'état d'occupation des trames de l'espace temps/fréquence existant avant cette transmission.

2. Procédé auto-adaptatif de transmission de données selon la revendication 1, caractérisé en ce que, dans une première étape de la procédure de veille, la station écoute sur une fréquence donnée (Qᵥ) les stations émettrices qui indiquent, par un message dans au moins l'un des créneaux occupés par trame occupée, l'état d'occupation de l'espace temps/fréquence tels qu'il leur apparaît, en ce que chaque station définit une table d'occupation en fonction de cet état d'occupation, en ce que chaque station choisit, en fonction de cette table, un ou des créneaux identifiés comme libres par elle-même et les autres stations dont la table d'occupation est à portée de communication.

3. Procédé auto-adaptatif de transmission de données selon la revendication 2, caractérisé en ce que, chaque station veillant sur des paliers de fréquence interrompus, le palier de veille correspondant de cette station est interrompu pour permettre la réception des créneaux dès que des créneaux porteurs d'informations destinées à une station sont reçus par celle-ci.

4. Procédé auto-adaptatif selon l'une quelconque des revendications précédentes, caractérisé en ce que le modulo d'occupation p est premier avec le nombre q de fréquences allouées, les trames comportant pn créneaux permettant alors une occupation optimale.

5. Procédé auto-adaptatif de transmission de données selon la revendication 4, caractérisé en ce que la fréquence de veille dure au moins qnp_{L}T pour recevoir au moins un créneau de toutes les stations en cours de transmission, qui émettent sur des trames pn, lorsque p est un nombre premier avec q.

6. Procédé auto-adaptatif de transmission de données selon la revendication 3, caractérisé en ce que la fréquence de veille est conditionnée par une détection de brouillage induite par une alarme.

7. Procédé auto-adaptatif selon l'une quelconque des revendications précédentes, caractérisé en ce que les fréquences allouées (Q₁-Q_{q}) sont utilisées au cours du temps dans un ordre quelconque ou dans un ordre périodiquement modifié de manière pseudo-aléatoire.

8. Procédé auto-adaptatif selon l'une quelconque des revendications précédentes, caractérisé en ce que les trames ont toutes le même nombre n de créneaux et sont organisées de manière à occuper tout l'espace temps/fréquence correspondant à un pavage orthogonal.

9. Procédé auto-adaptatif selon l'une quelconque des revendications précédentes, caractérisé en ce que le nombre de créneaux occupés par trame et la durée de ces créneaux dépendent du débit moyen défini par la modulation utilisée et par l'occupation qui dépend des caractéristiques de transmission utilisées.

10. Procédé auto-adaptatif selon l'une quelconque des revendications précédentes, caractérisé en ce qu'une procédure de sélection des créneaux d'émission disponibles, mise en place lorsque le nombre de créneaux demandés devient supérieur au nombre de créneaux disponibles pour une station donnée, consiste à calculer une densité d'occupation de chaque créneau par pondération de l'occupation des créneaux par la puissance du signal directement reçu par la station qui désire émettre.

11. Procédé auto-adaptatif selon la revendication 10, caractérisé en ce la pondération est réalisée par la puissance reçue des stations indiquant dans un message qu'elles observent également ce créneau occupé, le choix des créneaux d'émission étant alors effectué par tirage aléatoire parmi ceux des créneaux dont la densité d'occupation est la plus faible.

12. Dispositif de traitement récepteur/émetteur permettant d'élaborer, à partir d'une table d'occupation, les caractéristiques d'une émission conforme au procédé selon l'une quelconque des revendications précédentes, pour une station donnée en fonction de l'état d'occupation des communications, caractérisé en ce qu'un récepteur (10) reçoit un signal représentant la fréquence de réception (F)ᵣ captée par la station, le récepteur (10) transmettant un signal d'occupation des créneaux démodulés à un analyseur de réseau (11); en ce qu'un top de réception des fréquences reçues est transmis par un organe de calcul de recalage (12) de base de temps local (Bₜ), un signal indique le niveau de puissance reçue pendant les créneaux démodulés à un organe de calcul de table d'occupation (13) couplé également à l'analyseur de réseau (11), un signal de niveau de puissance reçue à l'extérieur des créneaux démodulés est transmis à un organe de gestion des fréquences reçues (14) pour estimer le brouillage de la fréquence de veille utilisée, et en ce qu'un organe de calcul des créneaux d'émission (15) pour la station à laquelle il est localement attaché est couplé à l'organe de calcul de la table d'occupation des créneaux (13) pour transmettre des informations à un organe de gestion des fréquences d'émission (16) et commander un émetteur 17 pour émettre une fréquence Fₑ.

13. Dispositif selon la revendication 12, caractérisé en ce que l'identification des créneaux d'émission est déterminée par l'organe de calcul (15) à partir du nombre de créneaux nécessaires définis en fonction du service souhaité et de l'occupation des créneaux déterminée par l'organe de calcul de la table d'occupation (13), le choix de la fréquence d'émission (Fe) est ensuite effectué à partir de l'organe de gestion (16) en fonction de la base de temps local, calé par l'organe de calcul (12), et des créneaux d'émission définis par l'organe de calcul (15), l'organe de gestion (16) commandant alors l'émission de l'émetteur (17).

14. Dispositif selon la revendication 12, caractérisé en ce que les organes de calcul et de gestion sont regroupés dans un même processeur de traitement d'informations standard, assisté par un réseau de portes programmable pour la gestion des bases de temps.

15. Dispositif selon la revendication 14, caractérisé en ce que, pour optimiser l'occupation de l'espace temps/fréquence, les bases de temps Bₜ d'émission de toutes les stations sont synchronisées sur la période T.

16. Dispositif selon la revendication 15, caractérisé en ce que la synchronisation est effectuée par une horloge de référence commune, externe au système de transmission des informations.

17. Dispositif selon la revendication 15, caractérisé en ce que la synchronisation est effectuée par calage de la base de temps Bₜ de chaque station sur celle de la station la plus en avance.

18. Dispositif selon la revendication 15, caractérisé en ce que la synchronisation est effectuée par calcul de la moyenne des heures de réception des créneaux et recalage de la base de temps de la station considérée sur cette moyenne.

19. Dispositif selon la revendication 15, caractérisé en ce que la synchronisation est effectuée par division de l'intervalle de durée élémentaire (T) en sous-intervalles, l'émission étant alors programmée pour se produire dans le sous-intervalle modulo (T) où ont été reçus le maximum de créneaux à un instant correspondant à la moyenne des instants de réception de ces créneaux, en cas d'égalité entre plusieurs sous-intervalles le sous-intervalle le plus en avance étant choisi.

20. Dispositif selon l'une quelconque des revendications 12 à 19, caractérisé en ce les stations disposent d'horloges de trame modulo p communes pour déterminer des créneaux libres en vue d'une émission, pour permettre de déduire les créneaux d'émission de la réception d'un seul créneau, l'information de récurrence d'émission pouvant alors se déduire des signaux reçus par le récepteur.
